Europäisches Patentamt

European Patent Office

Office européen des brevets

(11) Publication number: **0 069 503**
**B1**

(12) **EUROPEAN PATENT SPECIFICATION**

(45) Date of publication of patent specification: **08.05.85**

(51) Int. Cl.⁴: **B 65 G 1/14**

(21) Application number: **82303247.9**

(22) Date of filing: **22.06.82**

(54) A security device.

(30) Priority: **22.06.81 GB 8119176**

(43) Date of publication of application:
**12.01.83 Bulletin 83/02**

(45) Publication of the grant of the patent:
**08.05.85 Bulletin 85/19**

(84) Designated Contracting States:
**AT BE CH DE FR GB IT LI LU NL SE**

(56) References cited:
**DD-A- 67 357**
**DE-A-2 335 965**
**DE-U-1 661 569**
**US-A-4 069 927**
**US-A-4 247 092**

(73) Proprietor: **B.C.M.S. Engineering & Exhibitions Limited**
**22 Woolmer Way Woolmer Industrial Estate**
**Bordon, Hants GU35 9QF (GB)**

(72) Inventor: **Macneal, Lachlan Donald Cotes**
**Hatchfield Kingsley Green**
**Hastlemere Surrey (GB)**
Inventor: **Sinclair, James**
**4, Meadow View**
**Bordon Hants (GB)**

(74) Representative: **Gordon, Richard John Albert et al**
**F.J. CLEVELAND & COMPANY 40-43, Chancery Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a security device for retaining a plurality of floor carpets in a stack.

It is known in the retail trade to stack carpets one on top of another for convenience of storage and for convenience of display. Generally, the procedure is that a prospective purchaser removes a selected carpet from a stack of carpets and the carpet is taken to a station at which sale of the carpet is transacted.

A disadvantage of such a system is that there is no provision for discouraging pilfering of carpets.

According to the present invention there is provided a security device for retaining a plurality of floor carpet articles in a stack comprising an arm having a spike depending therefrom and support means for the arm whereby the arm is adapted to be located above the stack and is movable relative to the stack in a direction longitudinally of the spike towards an upper surface of an upper article of the stack so that the spike pierces the upper article and retains the upper article on the stack.

The arm may be adjustable relative to the support means in a direction longitudinally of the spike.

The support means may comprise a plurality of components adapted to co-operate one with another to adjust selectively the height of the arm relative to the stack.

The support means may include securing means for restraining relative movement of said components, the securing means being operable to permit said relative movement.

The arm may comprise a plurality of components pivotally connected one to another.

The arm may be provided with a plurality of said spikes.

The support means may comprise a base for extending under the stack.

The support means may also comprise co-operating telescopic members upstanding from the base.

Following is a description, by way of example only and with reference to the accompanying drawings, of one method of carrying the invention into effect.

In the drawings:—

FIGURE 1 is an elevation of one embodiment of a device in accordance with the present invention shown in juxtaposition with a stack of floor carpet articles,

FIGURE 2 is a perspective view of the embodiment shown in Figure 1,

FIGURE 3 is an elevation of another embodiment of a device in accordance with the present invention shown in juxtaposition with a stack of floor carpet articles, and

FIGURE 4 is a perspective view of the embodiment shown in Figure 3.

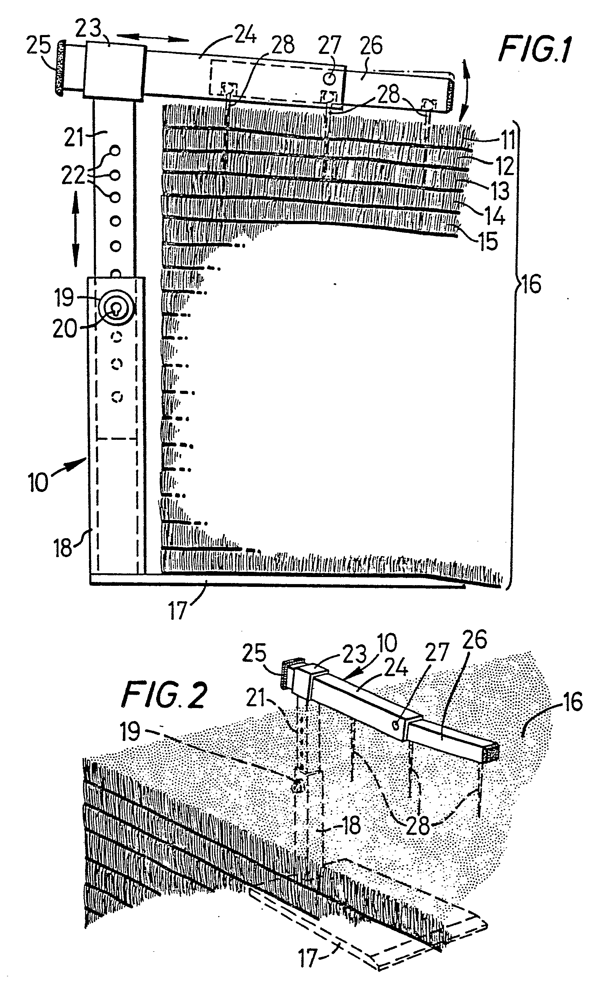

Referring now to Figures 1 and 2 of the drawings, there is shown a device 10 for retaining uppermost carpets 11, 12, 13, 14 and 15 of a stack 16 of such carpets.

The device 10 comprises a rectangular base plate 17 having a tubular member 18 upstanding therefrom at a location adjacent an edge of the base plate 17. The tubular member 18 is of rectangular transverse cross-section and is at an upper portion thereof provided with a stud (not shown) extending transversely inwardly of the tubular member 18 and being movable relative to the tubular member 18 in a direction transversely thereof. The stud is included in a locking mechanism 19 having a slot 20 for receiving a key (not shown). The arrangement is such that, when the key is inserted in the slot 20 and is turned, the stud is withdrawn from the bore of the tubular member 18 against a resilient bias. When the key is returned to the original inserted position, the stud is returned inwardly of the bore of the tubular member 18 due to the resilient bias.

The tubular member 18 has located therein an elongate member 21 slidable longitudinally in the tubular member 18 when the stud is withdrawn from the bore of the tubular member 18. The elongate member 21 is provided with a plurality of apertures 22 spaced longitudinally thereof each aperture 22 being adapted to receive an end portion of the stud when the stud extends inwardly of the bore of the tubular member 18 thereby selectively locating the elongate member 21 longitudinally of the tubular member 18. The elongate member 21 is provided, at an end portion thereof remote from the tubular member 18, with an integral sleeve portion 23 having a rectangular bore (not shown). The central longitudinal axis of the bore of the sleeve portion 23 is inclined downwardly towards the base plate 17 and the bore has extending therethrough an elongate carrier 24 of inverted U-shape transverse cross section, the dimensions of the bore of the sleeve portion 23 and the carrier 24, in transverse cross-section, being such that the carrier is movable longitudinally of the bore of the sleeve portion 23. An end portion of the carrier 24 is provided with a stop 25 limiting movement of the carrier 24 longitudinally of the bore of the sleeve portion 23. The carrier 24 has received therein a portion of an elongate arm 26 of substantially rectangular transverse cross-section, the arrangement being such that the arm 26 is pivotally connected midway intermediate opposite end portions thereof by a pin 27. The arm 26 is provided with a plurality of depending needles 28 spaced longitudinally of the arm.

In use, a carpet is located on the base 17 and further carpets are stacked one on top of another on the first carpet to provide the stack 16 of carpets. The key is inserted in the slot 20 of the locking mechanism 19 and turned with a result that the stud is withdrawn from the bore of the tubular member 18. The elongate member 21 is inserted longitudinally into the tubular member 18 and lowered therein so that the needles 28 pierce the uppermost carpets 11, 12, 13, 14 and 15 of the stack of carpets 16. The key then is returned to the originally inserted position and withdrawn from the slot 20 of the locking mechanism 19. In consequence, the stud is released and is urged by the resilient bias towards the elongate member 21. The arm 26 is moved downwardly so that the elongate member 21 moves relative to the tubular member 18 until the stud snaps into engagement with an aperture 22 in the elongate member 21.

The arm 26 thus is restrained from being lifted upwardly from the stack of carpets 16 and each of the carpets 11, 12, 13, 14 and 15 is restrained from being moved relative one to another due to the needles 28 extending therethrough. The weight of the uppermost carpets 11, 12, 13, 14 and 15 on the remaining carpets in the stack 16 is such that the carpets 11 to 15 inclusive generally cannot be lifted to remove carpets of the stack 16 located below the lowermost carpet 15.

In order to remove any one of the carpets comprising the stack 16, it is necessary to insert the key (which normally would be in the possession of a person of authority) into the slot 20 of the locking mechanism 19 and to effect turning of the key in order to operate the locking mechanism and lift the carrier 24 and, in consequence, the arm 26 and needles 28 from the stack of carpets 16. In this manner, pilferage of carpets from the stack is substantially reduced.

It will be appreciated that the needles 28 are standard and cause no damage to carpets. Furthermore, it will be appreciated that the needles 28 may be removably attached to the arm 26. It will also be appreciated that, in the case of aged carpets which, when arranged in stack result in at least upper carpets of the stack extending in curved configuration, the apparatus in accordance with the present invention compensates for such curvature due to the pivotable connection of the arm 26 and the carrier 24.

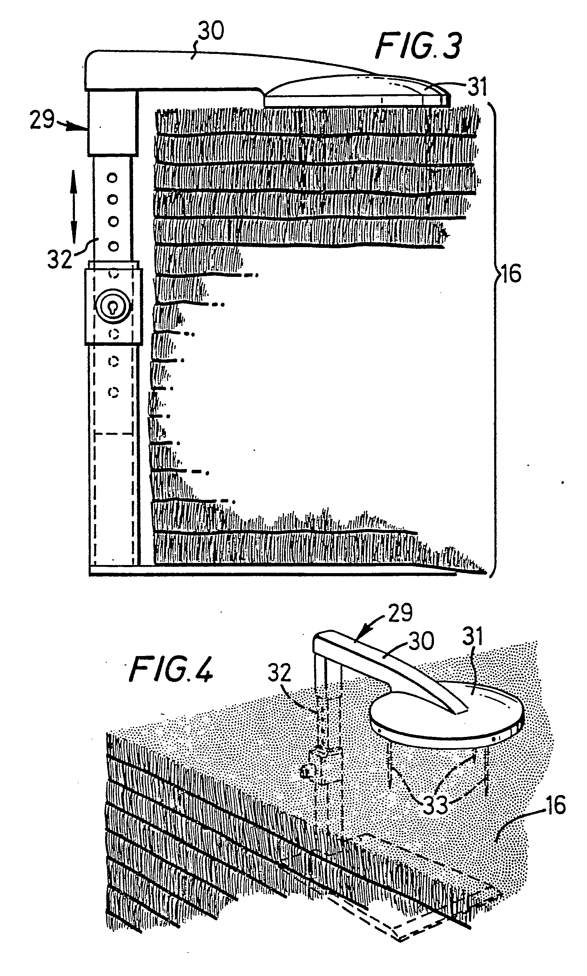

Referring now to Figures 3 and 4 of the drawings, there is shown a device 29 similar to the device 10 except that, in the device 29, an arm 30 is provided with an integral disc 31 at an outer end portion thereof, the plane of the disc extending substantially parallel to the plane of carpets in a stack 16, and an opposite end portion thereof is integral with a depending elongate member 32 corresponding to the elongate member 21 of the device 10. The disc is provided with depending needles 33. In all other respects the device 29 corresponds with the device 10.-

## Claims

1. A security device for retaining a plurality of floor carpet articles in a stack comprising an arm (26; 30) having a spike (28; 33) depending therefrom and support means (17, 18, 21; 32) for the arm (26; 30) whereby the arm is adapted to be located above the stack (16) and is movable relative to the stack in a direction longitudinally of the spike (28; 33) towards an upper surface of an upper article (11) of the stack (16) so that the spike (28; 33) pierces the upper article (11) and retains the upper article (11) on the stack (16).

2. A security device as claimed in Claim 1 wherein the arm (26; 30) is adjustable relative to the support means (17, 18, 21; 32) in a direction longitudinally of the spike (28; 33).

3. A security device as claimed in Claim 2 wherein the support means comprises a plurality of components (17, 18, 21) adapted to co-operate one with another to adjust selectively the height of the arm relative to the stack.

4. A security device as claimed in Claim 3 wherein there is provided securing means (19, 20) for restraining relative movement of said components, the securing means being operable to permit said relative movement.

5. A security device as claimed in any one of the preceding claims wherein the arm comprises a plurality of components (24, 26) pivotally connected one to another.

6. A security device as claimed in any one of the preceding claims wherein the arm is provided with a plurality of said spikes (28; 33).

7. A security device as claimed in any one of the preceding claims wherein the support means comprises a base (17) for extending under the stack.

8. A security device as claimed in Claim 7 wherein the support means comprises co-operating telescopic members (18, 21) upstanding from the base.

## Patentansprüche

1. Sicherungsvorrichtung zum Festhalten einer Vielzahl von Bodenteppichstücken in einem Stapel, mit einem Arm (26; 30), der einen nach unten gehenden Dorn (28; 33) hat, und einer Stützeinrichtung (17, 18, 21; 32) für den Arm (26; 30), wobei der Arm über dem Stapel (16) angeordnet werden kann und bezüglich des Stapels in Längsrichtung zu dem Dorn (28; 33) gegen eine obere Oberfläche eines oberen Stückes (11) des Stapels (16) bewegbar ist, so daß der Dorn (28; 33) in das obere Stück (11) einsticht und das obere Stück (11) auf dem Stapel (16) festhält.

2. Sicherungsvorrichtung nach Anspruch 1, wobei der Arm (26; 30) bezüglich der Stützeinrichtung (17, 18, 21; 32) in einer Längsrichtung zu dem Dorn (28; 33) einstellbar ist.

3. Sicherungsvorrichtung nach Anspruch 2, wobei die Stützeinrichtung eine Vielzahl von Bauteilen (17, 18, 21) aufweist, die miteinander zusammenarbeiten können, um die Höhe des Armes bezüglich des Stapels wahlweise einzustellen.

4. Sicherungsvorrichtung nach Anspruch 3, wobei eine Sicherungseinrichtung (19, 20) zum Unterbinden einer Relativbewegung der Bauteile vorgesehen ist, wobei die Sicherungseinrichtung betätigbar ist, um die Relativbewegung zu gestatten.

5. Sicherungsvorrichtung nach einem der vorhergehenden Ansprüche, wobei der Arm eine Vielzahl von Bauteilen (24, 26) aufweist, die gelenkig miteinander verbunden sind.

6. Sicherungsvorrichtung nach einem der vorhergehenden Ansprüche, wobei der Arm mit einer Vielzahl von Dorne (28; 33) versehen ist.

7. Sicherungsvorrichtung nach einem der vorhergehenden Ansprüche, wobei die Stützeinrichtung ein Unterteil (17) aufweist, das unter dem Stapel verläuft.

8. Sicherungsvorrichtung nach Anspruch 7, wobei die Stützeinrichtung zusammenarbeitende Teleskopteile (18, 21) aufweist, die von dem Unterteil hochstehen.

**Revendications**

1. Dispositif de sécurité pour retenir une série d'articles constitués de tapis de sol dans une pile comprenant un bras (26; 30) comportant une pointe (28; 33) faisant saillie vers le bas et des moyens de support (17, 18, 21; 32) pour le bras (26; 30) de manière à ce que le bras soit adapté pour être disposé au-dessus de la pile (16) et puisse être déplacé par rapport à la pile dans une direction longitudinale à la pointe (28; 33) vers une surface supérieure d'un article supérieure (11) de la pile (16) de telle sorte que la pointe (28; 33) perce l'article supérieure (11) et retienne l'article supérieur (11) sur la pile (16).

2. Dispositif de sécurité suivant la revendication 1, caractérisé en ce que le bras (26; 30) est ajustable par rapport aux moyens de support (17, 18, 21; 32) dans une direction longitudinale à la pointe (28; 33).

3. Dispositif de sécurité suivant la revendication 2, caractérisé en ce que les moyens de support comprennent une série d'éléments (17, 18, 21) adaptés pour coopérer mutuellement de manière à ajuster sélectivement la hauteur du bras par rapport à la pile.

4. Dispositif de sécurité suivant la revendication 3, caractérisé en ce que l'on prévoit des moyens de fixation (19, 20) pour empêcher un mouvement relatif de ces éléments, ces moyens de fixation étant actionnables pour permettre ce mouvement relatif.

5. Dispositif de sécurité suivant l'une quelconque des revendications précédentes, caractérisé en ce que le bras comprend une série d'éléments (24, 26) reliés mutuellement à pivotement.

6. Dispositif de sécurité suivant l'une quelconque des revendications précédentes, caractérisé en ce que le bras est pourvu d'une série de ces pointes (28; 33).

7. Dispositif de sécurité suivant l'une quelconque des revendications précédentes, caractérisé en ce que les moyens de support comprennent une base (17) s'étendant sous la pile.

8. Dispositif de sécurité suivant la revendication 7, caractérisé en ce que les moyens de support comprennent des organes télescopiques coopérant (18, 21) verticaux par rapport à la base.

*FIG.1*

*FIG.2*

FIG.3

FIG.4

2